# EUROPÄISCHE PATENTSCHRIFT

(11) **EP 2 693 090 B1**
(45) Veröffentlichungstag und Bekanntmachung des Hinweises auf die Patenterteilung: **28.01.2015**
(21) Anmeldenummer: 12005592.6
(22) Anmeldetag: 01.08.2012
(51) Int. Cl.: F16K 7/06

(54) **Handbedieneinheit für eine Absaugvorrichtung**
Hand operation unit for a suction device
Unité de commande manuelle pour un dispositif d'aspiration

(43) Veröffentlichungstag der Anmeldung: 05.02.2014
(73) Patentinhaber: VACUUBRAND GMBH + CO KG, 97877 Wertheim (DE)
(72) Erfinder: Dunin von Przychowski, Michael, Dr., 97877 Wertheim (DE); Buch, Florian, 97082 Würzburg (DE); Swatosch, Thorsten, 97877 Wertheim-Reicholzheim (DE); Rüster, Gerhard, 97907 Hasloch (DE); Dirscherl, Jürgen, Dr., 97892 Kreuzwertheim (DE); Gitmans, Frank, Dr., 97877 Wertheim (DE)
(74) Vertreter: Von Rohr Patentanwälte Partnerschaft mbB

(56) Entgegenhaltungen:
- GB-A- 2 264 550
- US-A- 1 347 931
- US-A- 2 197 995
- US-A- 2 684 559

## Beschreibung

Die Erfindung betrifft eine Handbedieneinheit für eine Absaugvorrichtung für Flüssigkeiten mit den Merkmalen des Oberbegriffs von Anspruch 1.

Absaugvorrichtungen der genannten Art werden in biologischen, medizinischen oder pharmazeutischen Labors beispielsweise zur Entfernung der Flüssigkeitsüberstände über Zellkulturen und für viele andere Anwendungen eingesetzt. Solche Absaugvorrichtungen bestehen meist aus einer Vorrichtung zur Vakuumerzeugung wie beispielsweise einer Membran-Vakuumpumpe, einer Sammelflasche für die abgesaugte Flüssigkeit, an die das Vakuum angelegt wird, sowie einer Handbedieneinheit, die die Flüssigkeit aufnimmt und die über einen Schlauch mit der Sammelflasche verbunden ist. Durch den Unterdruck in der Sammelflasche und damit im angeschlossenen Schlauch kann die Flüssigkeit mit der Handbedieneinheit eingesaugt und in der Flasche gesammelt werden.

Geräte für den professionellen Einsatz können weitere Komponenten wie beispielsweise eine automatische Vakuumregelung mit Abschaltung der Pumpe bei Erreichen eines vorgegebenen Unterdrucks beinhalten. Die Vakuumregelung schaltet die Pumpe bedarfsgerecht ein und aus. Dies reduziert die durchschnittliche Betriebszeit der Pumpe bei vielen Anwendungen erheblich, was den Energieverbrauch und Verschleiß der Pumpe senkt und die Geräuschbelästigung minimiert. Eine einstellbare Vakuumregelung ermöglicht es die Saugkraft des Gerätes zu beeinflussen.

Da solche Labor-Absaugvorrichtungen häufig auch für infektiöses Material eingesetzt werden, ist eine leichte Reinigung und Sterilisierbarkeit aller medienberührten Teile von Handbedieneinheit bis zur Sammelflasche unabdingbar. Meist sind zum Schutz der Umwelt in der Verbindungsleitung von der Sammelflasche zu der Vakuumquelle Sterilfilter vorgesehen. Zur Sterilisation werden nicht selten aggressive Chemikalien eingesetzt, so dass alle medienberührten Teile eine hohe chemische Beständigkeit aufweisen müssen. Alternativ werden alle medienberührten Teile regelmäßig autoklaviert, müssen also hohen Temperaturen und Wasserdampf unter hohem Druck widerstehen können. Um eine Kontamination der Umgebung auszuschließen und zur Erreichung des benötigten Unterdrucks, müssen die Handbedieneinheit (abgesehen von deren Öffnung zur Flüssigkeitsaufnahme), die Verbindungsleitung sowie die Sammelflasche aufnahme), die Verbindungsleitung sowie die Sammelflasche hermetisch dicht sein.

Die Handbedieneinheit enthält meist ein Ventil, das durch Handbetätigung die Verbindung zur Sammelflasche öffnet. Bei geöffnetem Ventil kann die zu entfernende Flüssigkeit beispielsweise durch eine hohle Spitze o. ä. an der Handbedieneinheit in den Verbindungsschlauch zur Sammelflasche hin gesaugt werden. Die aufgenommene Flüssigkeit gelangt so durch den Schlauch in die Sammelflasche. Ohne Ventil wäre die Verbindung von der Spitze zur Flasche dauernd offen. Das führte zu Geräuschbelästigungen an der Spitze und an der Vakuumquelle. Zudem würde die Vakuumquelle ständig unter hoher Gaslast betrieben, was zu vorzeitigem Verschleiß führte. Dies gilt besonders dann, wenn es sich um eine Absaugvorrichtung mit automatischer Vakuumregelung handelt. Trotz Vakuumregelung liefe die Pumpe permanent.

Vorteilhaft ist es auch, den Durchfluss des Ventils einstellen zu können, um zum Einen eine größere Flüssigkeitsmenge schnell, zum Anderen Überstände an empfindlichen Zellen vorsichtig und langsam entfernen zu können.

Das Absaugen von Flüssigkeiten gehört in vielen Laboratorien zu den Routine-Tätigkeiten. Daher muß die Handbedieneinheit hohen Ansprüchen an die Ergonomie genügen. Dazu gehören geeignete Formgebung, niedriges Gewicht und geringe Handbetätigungskräfte für das Ventil. Gleichzeitig muß die Handbedieneinheit auch obigen Anforderungen an die Reinigung, Sterilisierbarkeit und chemische Beständigkeit genügen.

Es sind verschiedene Ausführungen von Handbedieneinheiten bekannt. Meist handelt es sich um irgendeine Form von Handgriff mit einem Ventil, das durch einen Hebel, Knopf o. ä. von Hand bedient (geöffnet) werden kann, einer Aufnahme für Spitzen wie z.B. Pipetten, die in die aufzunehmende Flüssigkeit getaucht werden, sowie einem Anschluss für den Verbindungsschlauch zur Sammelflasche.

Verbreitet sind Handbedieneinheiten mit einem Schlauchquetschventil. Durch seitliche Krafteinwirkung auf einen elastischen Schlauch wird dieser gequetscht und kann so verschlossen bzw. durch Zurücknehmen der seitlichen Deformation geöffnet werden. In Handbedieneinheiten für Absaugvorrichtungen wie oben beschrieben wird als zu quetschender Schlauch häufig direkt der Verbindungsschlauch zur Sammelflasche benutzt. Dadurch erhält man eine durchgehende Schlauchverbindung von der Spitze bis zur Sammelflasche und vermeidet so obige Nachteile herkömmlicher Absperrventile. Da die aufgesaugten Medien von der Spitze bis zur Sammelflasche nur mit einem Übergangsstück sowie dem Verbindungsschlauch in Berührung kommen, ist die Anordnung leicht zu reinigen und hermetisch dicht, weil ohne gleitende Dichtungen.

Nachteilig bei Schlauchquetschventilen in dieser konkreten Anwendung in einer Handbedieneinheit ist, dass relativ große Kräfte zur Bedienung, also zur Öffnung des Ventils, nötig sind. Damit der Schlauch in gequetschtem Zustand dicht schließt, ist eine hohe seitliche Kraft erforderlich. Grund dafür ist, dass der Schlauch so steif sein muß, dass er (in ungequetschtem Zustand) auch bei Vakuum im Inneren gegen den äußeren Atmosphärendruck seine runde, innen offene Form behält, also nicht kollabiert. Nur so kann das Schlauchquetschventil öffnen, wenn die seitliche Krafteinwirkung auf den Schlauch zurückgenommen wird.

Die seitliche Krafteinwirkung auf den Schlauch wird beispielsweise durch Federn erzielt, die einen Nocken in den Schlauch drücken. Diese Kraft muß ausreichend hoch sein, um den (steifen) Schlauch zu quetschen. Durch Betätigung der Handbedieneinheit muß die seitliche Kraft auf den Schlauch überwunden werden. Daher muß der Benutzer eine hohe Handkraft anwenden, um das Schlauchquetschventil zu öffnen.

Insgesamt sind aus dem Stand der Technik viele Varianten von Handbedieneinheiten mit einer Vorrichtung zur Schlauchquetschung bekannt, wobei immer überlegt wird, wie man die aufzubringende Handkraft durch eine geeignete Hebelanordnung so weit wie möglich verringern kann (WO 03/038323 A1, EP 2 133 610 A1, EP 1 832 304 A1, DE 692 32 487 T2, DE 197 26 549 A1),

Aus technischen Anforderungen aufgrund des Schlauchmaterials, das typischerweise zum Einsatz kommt (z.B. Silikon), ergibt sich, dass während des Autoklavierens der Schlauch nicht gequetscht sein darf, das Schlauchquetschventil also geöffnet sein muß. Andernfalls bestünde die Gefahr, dass der Schlauch im gequetschten Zustand beim Autoklavieren (mit heißem Wasserdampf) verklebt.

Eine weitere Kundenanforderung ist, dass für das Absaugen größerer Flüssigkeitsmengen eine Möglichkeit zum Dauer-Einsaugen ohne permanente Handbetätigung gegeben sein soll. Für diese Anforderung ist es nötig, die Handbedieneinheit so aufzubauen, dass es eine Dauer-Auf-Position gibt, ohne dass das Ventil permanent von Hand betätigt wird. Die Dauer-Auf-Position des Schlauchquetschventils muß vom Kunden leicht aktivierbar sein.

Es ist bekannt, dass das Hand-Betätigungselement (z.B. der Hebel) des Schlauchquetschventils in der Stellung mit offenem Ventil arretiert werden kann, um diese Anforderung zu erfüllen. Dies ist jedoch nachteilig, da in diesem Falle die Federn, die das Schlauchquetschventil schließen sollen, permanent und auch während der hohen thermischen Belastung beim Autoklavieren in voll gespanntem Zustand sind. Dies ist sowohl für die Federn als auch für deren Aufnahmepunkte im Gehäuse und am Hebel wie auch für den Hebel selbst sehr nachteilig.

Schließlich sollte die Handbedieneinheit so gestaltet sein, dass der Schlauch leicht austauschbar ist. Er ist einem gewissen Verschleiß durch die Benutzung und das Autoklavieren ausgesetzt und muss daher gelegentlich ausgewechselt werden.

Konkreter Ausgangspunkt für die Lehre der vorliegenden Erfindung ist eine Handbedieneinheit die mindestens zwei bewegliche Vorrichtungen zur Schlauchquetschung aufweist, die unabhängig voneinander von Hand betätigbar sind (US 2,684,559 A). Der Schlauch wird nur dann auf Stellung "geschlossen" gequetscht, wenn mindestens zwei der Vorrichtungen zur Schlauchquetschung in ihre den Schlauch quetschende Stellung ausgelenkt sind. Dann hingegen, wenn nur eine der Vorrichtungen in ihre den Schlauch quetschende Stellung ausgelenkt ist, reicht das nicht aus, um den Schlauch so zu quetschen, dass das der Stellung "geschlossen" entspricht. Vielmehr ist der Durchflussquerschnitt des Schlauches dann entweder vollständig, zumindest aber zum Teil noch offen, so dass Flüssigkeit weiter hindurchfließen kann. Der Schlauch wird in diesem Fall gegenüber seiner Ruhelage eher verschoben als gequetscht. Natürlich verändert sich der Durchflussquerschnitt des Schlauches auch bei dieser Kraftbeaufschlagung durch eine der Vorrichtungen zur Schlauchquetschung, dass führt aber eben nicht zur vollständigen Schließung des Durchflussquerschnittes des Schlauches. Eine ähnliche Konstruktion ist auch aus der US 1,347,931 A bekannt.

Ausgehend von dem zuvor erläuterten Stand der Technik liegt der Erfindung die Aufgabe zugrunde, die bekannte Handbedieneinheit hinsichtlich ihrer Bedienbarkeit zu optimieren, insbesondere auf optimale Weise eine Dauer-Auf-Position und eine Dauer-Zu-Position zu ermöglichen.

Das zuvor aufgezeigte Problem ist bei einer Handbedieneinheit mit den Merkmalen des Oberbegriffs von Anspruch 1 durch die Merkmale des kennzeichnenden Teils von Anspruch 1 gelöst.

Bevorzugte Ausgestaltungen und Weiterbildungen der zuvor beschriebenen Handbedieneinheit sind Gegenstand der Unteransprüche.

Erfindungsgemäß ist vorgesehen, dass die zweite Vorrichtung zur Schlauchquetschung einen Hebelmechanismus mit einem Hebel aufweist, der durch einen von Hand bedienbaren Drehknopf mit einem exzentrisch zur Drehachse ausgebildeten Nocken bezogen auf den Schlauch radial auslenkbar ist. Von besonderem Vorteil ist es, wenn der Nocken in zwei unterschiedliche Stellungen verstellbar ist, die den beiden Endstellungen des Hebels bezüglich des Schlauches entsprechen, so dass der Hebel in diesen Endstellungen ohne Handbetätigung verbleibt.

Bei der zuvor erläuterten Konstruktion kann die zweite Vorrichtung zur Schlauchquetschung einen Hebel mit einer zentralen Schwenkachse aufweisen, dessen einer Hebelarm in der den Schlauch quetschenden Stellung auf den Schlauch drückt, während dessen anderer Hebelarm an dem zuvor angesprochenen Nocken anliegt und von diesem radial zum Schlauch verstellt werden kann. Bei Drehung des Drehknopfes durch den Anwender drückt der Nocken den Hebel so, dass dessen anderer Hebelarm in die den Schlauch quetschende Stellung ausgelenkt wird.

Wird der Drehknopf in eine andere Stellung gedreht, so wird der Hebel freigegeben und der Schlauch kann unter seiner eigenen Rückstellkraft den an ihm anliegenden Hebelarm in die den Schlauch nicht quetschende Stellung zurückdrücken. Gegebenenfalls kann man diese Bewegung auch mit einer Rückstellfeder unterstützen.

In einer bevorzugten Auslegung ist der Nocken so ausgelegt, dass der Hebel in den beiden Endpositionen des Hebels bezüglich des Schlauches einrastet, so dass der Hebel in diesen Positionen ohne weitere Handbetätigung verbleibt. Es können auch weitere Rastungen in Zwischenpositionen vorgesehen werden.

Besonders vorteilhaft ist es ferner, wenn zwei Vorrichtungen zur Schlauchquetschung an zwei einander gegenüberliegenden Stellen des Schlauches angreifen.

Dann, wenn die mindestens zwei beweglichen Vorrichtungen zur Schlauchquetschung sich in ihren den Schlauch nicht quetschenden Stellungen befinden, ergibt sich im Gehäuse der Handbedieneinheit bevorzugt ein freier Querschnitt, der mindestens dem äußeren Querschnitt des Schlauchs entspricht.

Bevorzugt ist vorgesehen, dass mindestens eine der Vorrichtungen zur Schlauchquetschung einen Hebelmechanismus zum Quetschen des Schlauches aufweist. Besonders bevorzug ist vorgesehen, dass genau zwei Vorrichtungen zur Schlauchquetschung vorgesehen sind und dass vorzugsweise beide Vorrichtungen zur Schlauchquetschung einen Hebelmechanismus zum Quetschen des Schlauches aufweisen.

Eine andere Ausgestaltung einer der Vorrichtungen zur Schlauchquetschung besteht darin, dass diese stufenlos von Hand einstellbar ist.

In Verbindung mit besonders bevorzugten Ausgestaltungen wird zur Erläuterung der Fall betrachtet, dass genau zwei Vorrichtungen zur Schlauchquetschung vorhanden sind. Beide Vorrichtungen sind unabhängig voneinander von Hand betätigbar und greifen am Schlauch an gegenüberliegenden Stellen an. Die erste Vorrichtung erlaubt das manuell betätigte Absaugen beispielsweise über einen federbelasteten Hebel, der eine stufenlose Öffnung des Ventils, und damit eine Dosierung der Saugkraft, erlaubt. Die zweite Vorrichtung ist so ausgelegt, dass sie in beiden Endpositionen relativ zum Schlauch auch ohne permanente Handbetätigung verbleibt. In der Praxis dient diese Vorrichtung zum Einstellen des Betriebszustands durch den Anwender.

Der eine Betriebszustand ist, dass die zweite Vorrichtung in ihre den Schlauch quetschende Stellung ausgelenkt ist. Sie verbleibt dort selbständig, solange der Anwender diesen Zustand nicht verändert. In diesem Betriebszustand öffnet das Ventil nur dann, wenn die erste Vorrichtung zur Schlauchquetschung von Hand betätigt wird, also vom Schlauch abhebt, so dass dieser öffnet und den Querschnitt freigibt ("Ventil auf"). Dieser Betriebszustand ist der übliche für ein von Hand gesteuertes Absaugen von Flüssigkeit. Ohne Betätigen der ersten Vorrichtung ist das Ventil geschlossen, bei Betätigen der ersten Vorrichtung öffnet das Ventil und der Anwender kann Flüssigkeit absaugen.

Der andere Betriebszustand ist der, bei dem die zweite Vorrichtung in ihre den Schlauch nicht quetschende Stellung ausgelenkt, also vom Schlauch abgehoben ist. Solange der Anwender diesen Zustand nicht verändert, ist das Ventil bezogen auf die zweite Vorrichtung dauernd geöffnet. Das ist unabhängig davon, ob die erste Vorrichtung in ihre den Schlauch quetschende Stellung ausgelenkt ist oder in ihrer den Schlauch nicht quetschenden Stellung steht. Diese Einstellung wird zum permanenten Absaugen von Flüssigkeit, zum Autoklavieren sowie zum Einschieben des Schlauches beispielsweise nach dessen Reinigung oder Austausch benutzt.

Die erfindungsgemäße Handbedieneinheit mit Schlauchquetschventil erlaubt auch die Verwendung des gleichen oder sogar desselben Schlauches für das Ventil und für die Verbindungsleitung zum Sammelbehälter für die Flüssigkeiten.

Im Folgenden wird eine beispielhafte Ausführungsform der erfindungsgemäßen Handbedieneinheit anhand schematischer Figuren erläutert. In der Zeichnung zeigt
- Figuren 1a- 1d: ein Ausführungsbeispiel einer erfindungsmäßen Handbedien-einheit jeweils in einem Längsschnitt, die einzelnen Bauteile in unterschiedlichen Stellungen,
- Figuren 2a, b: die Handbedieneinheit von Figur 1 jeweils im Querschnitt, der links vom Querschnitt in seiner Lage eingezeichnet ist, wobei Figur 2a Figur 1a entspricht und Figur 2b Figur 1c entspricht,
- Figuren 3a - d: als Ausschnitte aus Figur 1d, 1c, 1b, 1a, dargestellt mit dem unterschiedlich verlagerten oder gequetschten Schlauch.

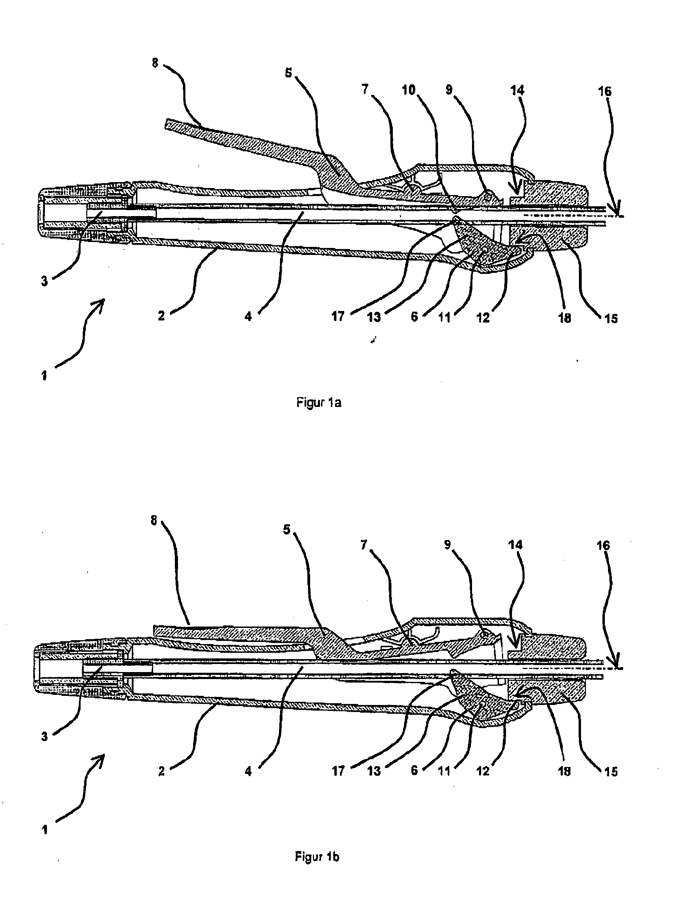

Figur 1a zeigt eine beispielhafte Ausführungsform der erfindungsgemäßen Handbedieneinheit 1 in einer schematischen Längsschnittdarstellung. Die Handbedieneinheit 1 hat ein als Handgriff geformtes Gehäuse 2 mit einer Aufnahme 3 für Röhrchen, Spitzen o.ä. zum Einsaugen einer Flüssigkeit, einen durchgehend dargestellten Schlauch 4, der zu einem Sammelbehälter (hier nicht abgebildet) für die Flüssigkeit führt, und zwei Vorrichtungen 5; 6 zum Quetschen des Schlauches. In der hier gezeigten Ausführungsform sind beide Vorrichtungen 5; 6 als Hebelmechanismen dargestellt.

Die erste Vorrichtung 5 wird von einem doppelarmigen Hebel gebildet, der einen Drehpunkt 7 und einen von dort nach links abragenden ersten Hebelarm 8 aufweist. Dieser Hebelarm 8 ist direkt von Hand betätigbar. Vom Drehpunkt 7 nach rechts ragt zum Kraftangriffspunkt 9 ein zweiter Hebelarm der Vorrichtung 5 ab. Am Kraftangriffspunkt 9 greift im dargestellten Ausführungsbeispiel eine nicht im einzelnen dargestellte Zugfeder an, die den Hebelarm in Figur 1a nach unten zieht. Durch die am Kraftangriffspunkt 9 angreifende, nach unten gerichtete Federkraft wird der Vorsprung 10 an der ersten Vorrichtung 5 nach unten in den Schlauch 4 hineingedrückt, also die Vorrichtung 5 insgesamt in ihre den Schlauch 4 quetschende Stellung ausgelenkt.

Im in Figur 1a dargestellten Zustand ist der Hebelarm 8 der ersten Vorrichtung 5 nicht von Hand betätigt. Die Vorrichtung 5 wird daher von einer oder mehreren Zug-Federn (nicht dargestellt), die am Punkt 9 und Punkt 11 angreifen, bei Punkt 10 in den Schlauch 4 gedrückt.

Der Hebelarm 8 ist in Figur 1a am oberen, vom Handgriff maximal entfernten Anschlag. Zur Entlastung des Gehäuses 2 wird dieser Anschlag am besten in der Nähe der Federn gebildet, beispielsweise indem die Vorrichtung 5 am Drehpunkt 11 der zweiten Vorrichtung 6 anliegt (in Figur 1a verdeckt, siehe daher Figur 1b), an dem auch die Zug-Feder der Vorrichtung 5 befestigt ist. Konkret kann man davon ausgehen, dass die Schwenkachse 11 für den Hebel 13 der zweiten Vorrichtung 6 im Gehäuse 2 ortfest sitzt. An ihr kann eine Zug-Feder zum Kraftangriffspunkt 9 am Hebel 5 eingehängt werden. Im dargestellten und bevorzugten Ausführungsbeispiel sind, ohne dass das hier eingezeichnet ist, zwei Zug-Federn rechts und links vom Schlauch 4 an der Schwenkachse 11 eingehängt, so dass die erforderliche, hohe Federkraft auf zwei Federn verteilt wird und der Hebelmechanismus der ersten Vorrichtung 5 symmetrisch mit Kraft beaufschlagt wird.

Die zweite Vorrichtung 6 weist die Schwenkachse 11 auf, die den doppelarmigen Hebel 13 trägt. Ein Hebelarm 12 des doppelarmigen Hebels 13 liegt an einem exzentrischen Nocken 14 eines Drehknopfes 15 an, der von Hand um die Achse 16 gedreht werden kann. In den Figuren 1a und 1b ist der Drehknopf 15 so eingestellt, dass der Hebelarm 12 am Punkt 18 mit dem größten Radius des Nockens 14 anliegt, so dass der Hebel 12 maximal ausgelenkt ist und der Hebel 13 bei Punkt 17 in den Schlauch 4 gedrückt wird. Die Punkte 10 und 17 liegen an einander gegenüber liegenden Stellen des Schlauches 4.

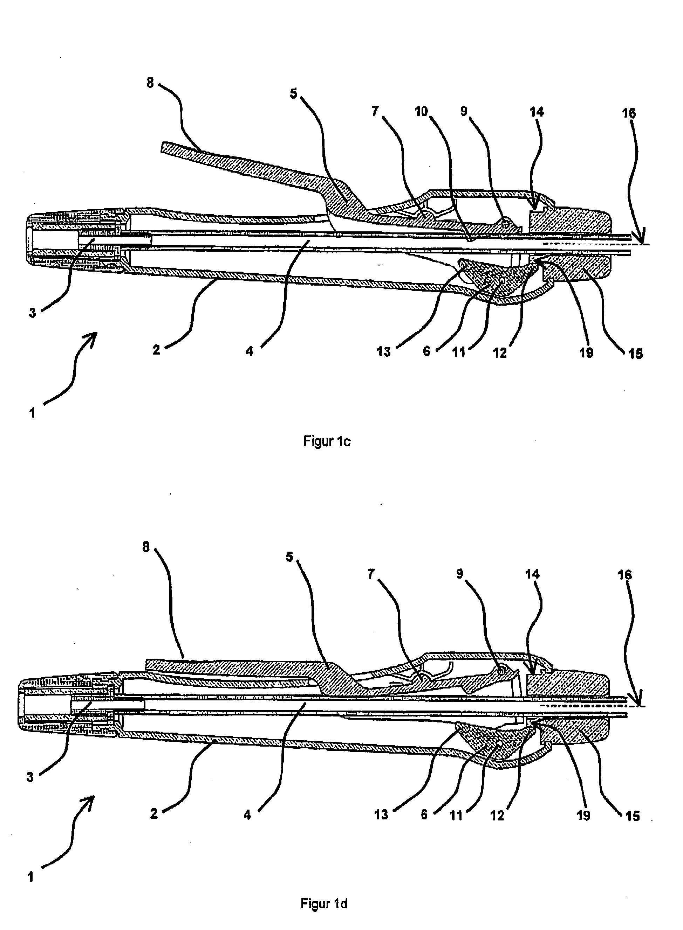

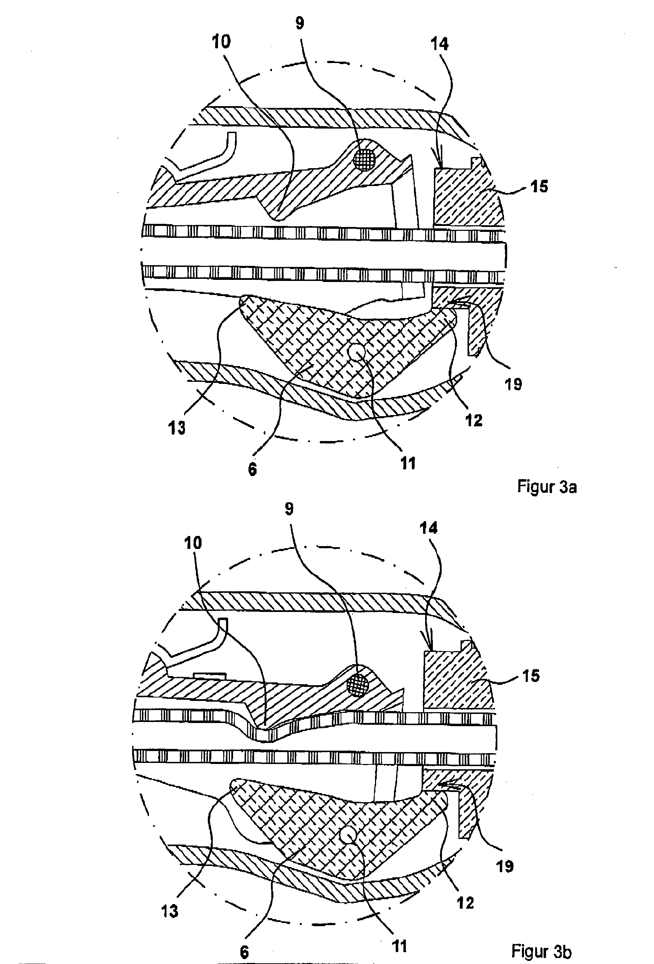

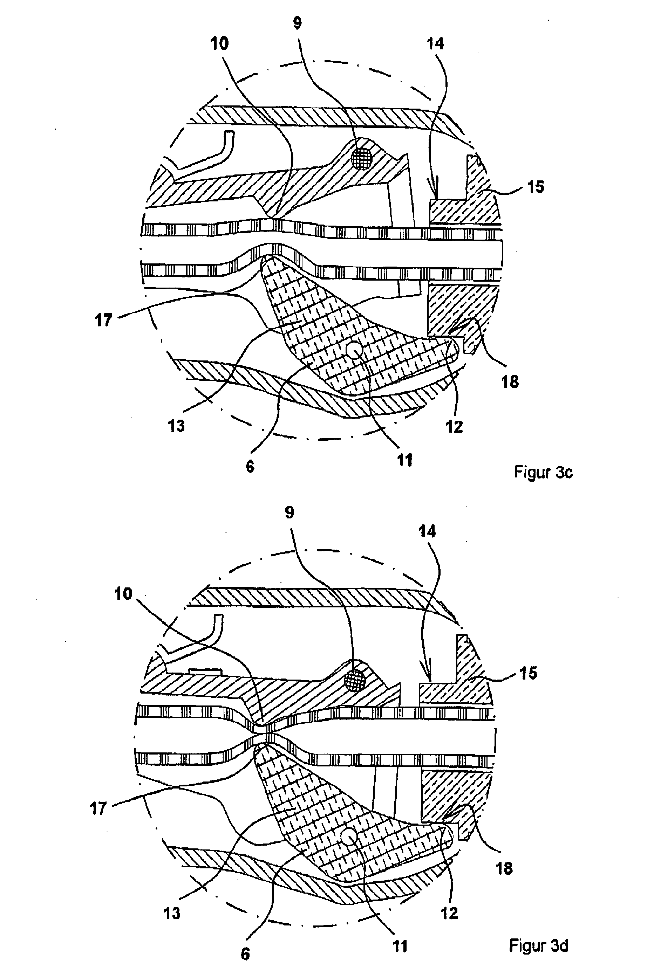

Zur zeichnerischen Vereinfachung ist in Figur 1 der Schlauch 4 so dargestellt, als würde er an den Punkten 10 und 17 durch die beiden Schlauchquetschvorrichtungen 5 und 6 hindurch laufen. Tatsächlich wird der Schlauch 4 jedoch von den beiden in Richtung des Schlauches ausgelenkten Vorrichtungen 5 und 6 auf Position "Ventil geschlossen" gequetscht (siehe dazu Figur 3). Figur 1a zeigt die erfindungsgemäße Handbedieneinheit also in der Einstellung "Manuelle Betätigung" im Zustand "Ventil geschlossen". Figur 3d zeigt den entsprechenden Ausschnitt aus Figur 1a, aus dem sich ergibt, dass der Schlauch 4 hier komplett verformt und so gequetscht ist, dass der Durchflussquerschnitt geschlossen ist.

In Figur 1b ist der Zustand für die Vorrichtung 6 wie in Figur 1a. Die erste Vorrichtung 5 ist nun aber so gezeigt, als würde ein Anwender auf den Hebelarm 8 drücken. Dadurch hebt die Vorrichtung 5 am Punkt 10 vom Schlauch 4 ab. Obwohl die Vorrichtung 6 weiterhin in Richtung des Schlauches 4 ausgelenkt ist und am Punkt 17 den Schlauch 4 nach oben drückt, ist das Schlauchquetschventil nun ausreichend weit geöffnet, so dass der Anwender Flüssigkeit einsaugen kann. Durch die große Länge des Hebelarms 8 im Vergleich mit der Länge des Hebelarms zwischen dem Drehpunkt 7 und dem Kraftangriffspunkt 9 sind die Bedienkräfte gering. In Figur 3c sieht man in dieser Position, wie der Schlauch 4 nach oben verformt ist, sein Durchflussquerschnitt aber zum Teil noch offen ist.

In den Figuren 1c, 1d ist der Drehknopf 15 so eingestellt, dass der Hebelarm 12 am Punkt 19 mit dem kleinsten Radius des Nockens 14 anliegt, so dass der Hebel 13 am Punkt 17 vom Schlauch 4 abhebt. Das Schlauchquetschventil ist nun geöffnet, unabhängig davon, ob die erste Vorrichtung 5 am Hebelarm 8 betätigt ist (Figur 1d) oder nicht (Figur 1c). Daher erübrigt sich ein Betätigen des Hebels 8 wie in Figur 1d gezeigt. Figur 1c zeigt die erfindungsgemäße Handbedieneinheit also in der "Dauer-Auf-Position" des Schlauchquetschventils, die für das Absaugen größerer Flüssigkeitsmengen sowie für das Autoklavieren benötigt wird. Während des Autoklavierens ist die erste Vorrichtung 5 somit unbetätigt und liegt am Endanschlag bei 11 auf, der Hebel und die Federn an dieser Vorrichtung 5 sind im gering belasteten Zustand. Obwohl also die erste Vorrichtung 5 hier in ihre den Schlauch 4 quetschende Stellung ausgelenkt ist, kann der Schlauch 4 ausweichen und sein Querschnitt ist kaum beeinträchtigt. Man erkennt diese Position im Ausschnitt in Figur 3b.

Wird der Hebel 8 der ersten Vorrichtung 5 bei dieser Einstellung des Drehknopfes 15 gedrückt, so ergibt sich ein völlig freier Durchgang für den Schlauch 4, wie in Figur 1d und Figur 3a zu sehen ist. In dieser Stellung kann der durchgehende Schlauch 4 ohne Widerstand eingefädelt werden, was für einen einfachen Austausch des Schlauches 4 sehr vorteilhaft ist. Bei der erfindungsgemäßen Handbedieneinheit ist der Austausch des Schlauches 4 durch den Anwender somit einfach und problemlos möglich, insbesondere ohne dass die Handbedieneinheit zerlegt werden muß.

Die Ausschnittdarstellung in Figur 3 zeigt, nochmals erläutert, in Figur 3a die Position beider Vorrichtungen 5, 6, in der der Schlauch 4 völlig unbeeinflusst ist. In Figur 3b ist der Hebelarm 8 der Vorrichtung 5 losgelassen worden. Dadurch drückt der Vorsprung 10 von oben auf den Schlauch 4 und dieser wird etwas nach unten verformt, kann aber ausweichen. Der Durchflussquerschnitt des Schlauches 4 bleibt nahezu unverändert. In Figur 3c ist der Hebelarm 8 der Vorrichtung 5 gedrückt, der Hebel 13 der Vorrichtung 6 aber in der den Schlauch 4 quetschenden Stellung. Dadurch ist der Schlauch 4 erheblich nach oben angehoben und gegen den Punkt 10 der Vorrichtung 5 gedrückt worden. Der Durchflussquerschnitt des Schlauches 4 ist kleiner als in Figur 3a, b, aber immer noch so groß, dass man mit der Vorrichtung Flüssigkeit absaugen kann. In Figur 3d schließlich ist die komplette Stellung "geschlosssen" erreicht, weil beide Vorrichtungen 5, 6 in ihre den Schlauch 4 quetschenden Stellungen verlagert worden sind.

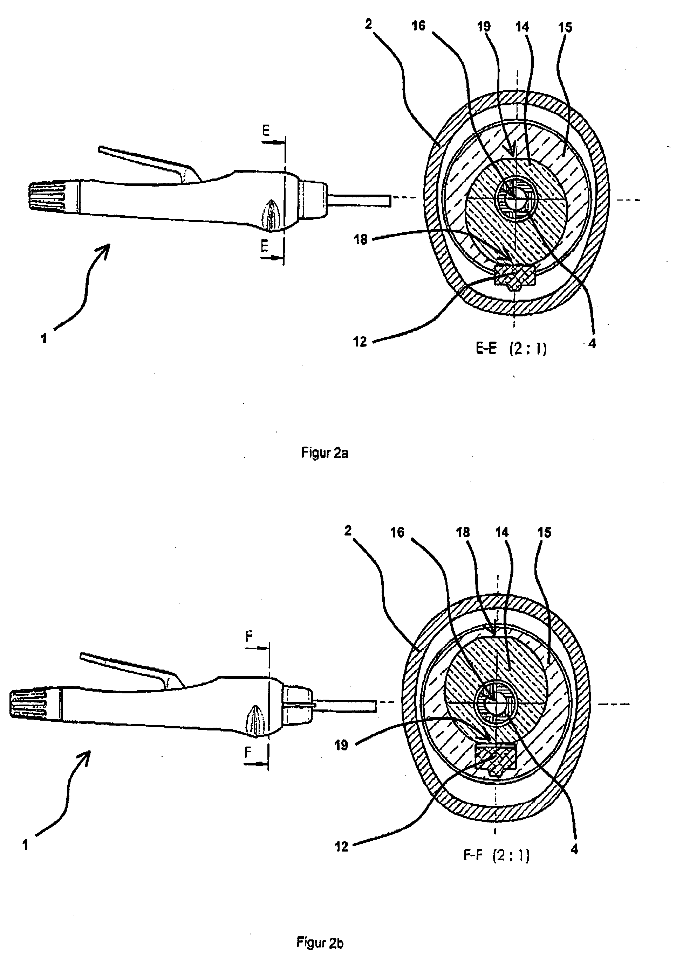

Die Figuren 2a, 2b zeigen Querschnitte durch die erfindungsgemäße Handbedieneinheit 1 mit Blick auf den exzentrischen Nocken 14 mit anliegendem Hebelarm 12 (hier angeschnitten gezeigt), sowie mit dem Drehknopf 15 und mit dessen Drehachse 16.

Figur 2a zeigt den Drehknopf 15 so eingestellt, dass der Hebelarm 12 am Punkt 18 mit dem größten Radius des Nockens 14 anliegt, so dass der Hebel 12 maximal ausgelenkt wird. Dies entspricht dem Zustand wie in den Figuren 1a und 1b dargestellt.

Figur 2b zeigt den Drehknopf 15 so eingestellt, dass der Hebelarm 12 am Punkt 19 mit dem kleinsten Radius des Nockens 14 anliegt, so dass der Hebelarm 13 vom Schlauch 4 abhebt. Dies entspricht dem Zustand wie in den Figuren 1c und 1d dargestellt.

Durch die Abflachungen an den Punkten 18 und 19 auf dem bzgl. der Drehachse 16 exzentrischen Nocken 14 rastet der Hebelarm 12 an diesen Stellen auf dem Nocken 14 ein. Um diesen Rasteffekt zu unterstützen kann der Hebel 12 durch eine (in den Figuren nicht dargestellte) Feder auf den Nocken 14 gedrückt werden. Zusätzlich können die Abflachungen an den Punkten 18 und 19 auf dem Nocken 14 auch noch Vertiefungen in Richtung Drehachse 16 oder andere Mittel zur Rastung enthalten. Es können auch noch weitere Zwischenpositionen und Rastpunkte zusätzlich vorhanden sein. Dank des Einrastens des Hebels 12 auf dem Nocken 14 bleibt die Einstellung des Drehknopfes 15 so lange erhalten, bis der Anwender den Drehknopf 15 neu einstellt. Mit der Einstellung des Drehknopfes 15 legt der Anwender also den Betriebszustand der Handbedieneinheit fest;
A: Manuelles, durch Drücken des Hebels 8 betätigtes Absaugen, siehe Figuren 1a, 1b, 2a, 3d, 3c;
B: Dauersaugen, Autoklavieren oder Schlauch wechseln, siehe Figuren 1c, 1d, 2b, 3b, 3a.

Die erfindungsgemäße Handbedieneinheit bietet durch das Schlauchquetschventil eine leichte Reinigung und Sterilisierbarkeit, sowie ein leichtes Wechseln des Schlauches 4 bei Verschleiß und Verschmutzung, erlaubt durch den kompakten Aufbau eine sehr ergonomische Gestaltung und ist dank der geringen Anzahl an Teilen kostengünstig herzustellen. Die Welle 11 erfüllt in der gezeigten Ausführungsform drei Funktionen: Aufhängung der Zug-Federn für den Hebel 5, Endanschlag des Hebels 5 und Drehachse des Hebels 13.

Durch die erfindungsgemäße Ausgestaltung mit mindestens zwei unabhängigen Vorrichtungen zur Schlauchquetschung können einerseits die Betriebsarten "Manuelles Absaugen" oder "Dauersaugen/Autoklavieren/Schlauchwechsel" vom Anwender überraschend leicht und zuverlässig eingestellt werden, andererseits ist Dauer-Absaugen und Autoklavieren ohne Belastung des Geräts durch eine Hebel-Arretierung o.ä. möglich. Zudem ist ein Schlauchwechsel ohne Zerlegen der Handbedieneinheit möglich.

## Patentansprüche

1. Handbedieneinheit für eine Absaugvorrichtung für Flüssigkeiten mit einem Gehäuse (2), einem in dem Gehäuse (2) verlaufenden Schlauch (4) zum Leiten der Flüssigkeit und einem in dem Gehäuse (2) angeordneten, von Hand betätigbaren Schlauchquetschventil (5, 6) zur Einstellung des Durchlasses der abzusaugenden Flüssigkeit,
wobei das Schlauchquetschventil (5, 6) mindestens zwei bewegliche Vorrichtungen (5; 6) zur Schlauchquetschung aufweist, die unabhängig voneinander von Hand betätigbar sind, und mindestens eine der Vorrichtungen (5; 6) zur Schlauchquetschung einen Hebelmechanismus zum Quetschen des Schlauches (4) aufweist,
wobei der Schlauch (4) nur dann in der Stellung "geschlossen" gequetscht ist, wenn mindestens zwei dieser Vorrichtungen (5; 6) in ihre den Schlauch (4) quetschende Stellung ausgelenkt sind, während dann, wenn nur eine dieser Vorrichtungen (5;6) in ihre den Schlauch (4) quetschende Stellung ausgelenkt ist, der Durchflussquerschnitt des Schlauches (4) zumindest zum Teil offen ist,
**dadurch gekennzeichnet,**
**dass** eine Vorrichtung (6) zur Schlauchquetschung einen Hebelmechanismus mit einem Hebel (13) aufweist, der durch einen von Hand bedienbaren Drehknopf (15) mit einem exzentrisch zur Drehachse ausgebildeten Nocken (14) bezogen auf den Schlauch (4) radial auslenkbar ist.

2. Handbedieneinheit nach Anspruch 1, **dadurch gekennzeichnet,**
**dass** der Nocken (14) in zwei unterschiedliche Stellungen verstellbar ist, die den beiden Endstellungen des Hebels (13) bezüglich des Schlauches (4) entsprechen, dass der Hebel (13) in diesen Endstellungen ohne Handbetätigung verbleibt und dass, vorzugsweise, der Hebel (13) in den Endstellungen gegenüber dem Nocken (14) verrastet ist.

3. Handbedieneinheit nach Anspruch 1 oder 2, **dadurch gekennzeichnet,**
**dass** bei zwei Vorrichtungen (5; 6) zur Schlauchquetschung diese an einander gegenüberliegenden Stellen des Schlauches (4) angreifen.

4. Handbedieneinheit nach einem der vorhergehenden Ansprüche, **dadurch gekennzeichnet,**
**dass** bei Auslenkung aller Vorrichtungen (5, 6) zur Schlauchquetschung in ihre den Schlauch (4) nicht quetschende Stellung in Gehäuse (2) ein freier Durchgang mit mindestens dem Außenquerschnitt des Schlauches (4) vorliegt.

5. Handbedieneinheit nach einem der vorhergehenden Ansprüche, **dadurch gekennzeichnet,**
**dass** mindestens eine Vorrichtung (5) zur Schlauchquetschung von Hand stufenlos einstellbar ist.

6. Handbedieneinheit nach einem der vorhergehenden Ansprüche, **dadurch gekennzeichnet,**
**dass** genau zwei Vorrichtungen (5; 6) zur Schlauchquetschung vorgesehen sind und dass vorzugsweise beide Vorrichtungen (5; 6) zur Schlauchquetschung einen Hebelmechanismus zum Quetschen des Schlauches (4) aufweisen.

7. Handbedieneinheit nach einem der vorhergehenden Ansprüche, **dadurch gekennzeichnet,**
**dass** der Schlauch (4) im Gehäuse (2) der Handbedieneinheit den selben Querschnitt hat wie ein Verbindungsschlauch zu einem Sammelbehälter für die Flüssigkeit.

8. Handbedieneinheit nach Anspruch 7, **dadurch gekennzeichnet,**
**dass** der Verbindungsschlauch zum Sammelbehälter für die Flüssigkeit durchgehend und einstückig in den Schlauch (4) im Gehäuse (2) der Handbedieneinheit übergeht.

9. Handbedieneinheit nach einem der vorhergehenden Ansprüche, **dadurch gekennzeichnet,**
**dass** mindestens eine Vorrichtung (5) zur Schlauchquetschung in ihre den Schlauch (4) quetschende Stellung durch eine Feder vorgespannt und entgegen der Federkraft dieser Feder von Hand auslenkbar ist.

10. Handbedieneinheit nach Anspruch 9, **dadurch gekennzeichnet,**
**dass** die Vorrichtung (5) zur Schlauchquetschung einen Hebelarm (8) für die Betätigung von Hand aufweist, dessen wirksame Länge ein Mehrfaches der wirksamen Länge des für die Quetschung des Schlauchs (4) wirksamen Hebelarms beträgt.

## Claims

1. Hand-held operating unit for a suction device for liquids,
having a housing (2), a hose (4), extending in the housing (2), for guiding the liquid, and a manually actuable hose pinch valve (5, 6), arranged in the housing (2), for setting the aperture for liquid to be sectioned,
wherein the hose pinch valve (5, 6) has at least two movable devices (5; 6) for hose pinching, said devices (5; 6) being manually actuable independently of one another, and at least one of the devices (5; 6) for hose pinching has a lever mechanism for pinching the hose (4),
wherein the hose (4) is only pinched in the "closed" position when at least two of these devices (5; 6) have been deflected into their position squeezing the hose (4), whereas when only one of these devices (5; 6) has been deflected into its position pinching the hose (4), the flow cross section of the hose (4) is at least partly open,
**characterized**
**in that** one device (6) for hose pinching has a lever mechanism with a lever (13) which is radially deflectable with respect to the hose (4) by a manually operable rotary knob (15) having a cam (14) formed eccentrically with respect to the rotation axis.

2. Hand-held operating unit according to Claim 1, **characterized**
**in that** the cam (14) is adjustable into two different positions which correspond to the two end positions of the lever (13) with respect to the hose (4), in that the lever (13) remains in these end positions without manual actuation, and in that, preferably, the lever (13) is latched with respect to the cam (14) in the end positions.

3. Hand-held operating unit according to Claim 1 or 2, **characterized**
**in that** in the case of two devices (5; 6) for hose pinching, said devices act on mutually opposite points of the hose (4).

4. Hand-held operating unit according to one of the preceding claims, **characterized**
**in that** when all of the devices (5, 6) for hose pinching are deflected into their position not pinching the hose (4), a free passage having at least the external cross section of the hose (4) is present in the housing (2).

5. Hand-held operating unit according to one of the preceding claims, **characterized**
**in that** at least one device (5) for hose pinching is settable manually in an infinitely variable manner.

6. Hand-held operating unit according to one of the preceding claims, **characterized**
**in that** precisely two devices (5; 6) for hose pinching are provided, and in that preferably both devices (5; 6) for hose pinching have a lever mechanism for pinching the hose (4).

7. Hand-held operating unit according to one of the preceding claims, **characterized**
**in that** the hose (4) in the housing (2) of the hand-held operating unit has the same cross section as a connecting hose to a collecting container for the liquid.

8. Hand-held operating unit according to Claim 7, **characterized**
**in that** the connecting hose to the collecting container for the liquid transitions continuously and integrally into the hose (4) in the housing (2) of the hand-held operating unit.

9. Hand-held operating unit according to one of the preceding claims, **characterized**
**in that** at least one device (5) for hose pinching is pretensioned into its position pinching the hose (4) by a spring and is manually deflectable counter to the spring force of this spring.

10. Hand-held operating unit according to Claim 9, **characterized**
**in that** the device (5) for hose pinching has a lever arm (8) for manual actuation, the effective length of said lever arm (8) being a multiple of the effective length of the lever arm that acts to pinch the hose (4).

## Revendications

1. Unité de commande manuelle pour un dispositif d'aspiration de liquides comprenant un boîtier (2), un tuyau (4) s'étendant dans le boîtier (2) pour conduire le liquide et une soupape d'écrasement de tuyau (5, 6) pouvant être actionnée à la main, disposée dans le boîtier (2), pour l'ajustement du débit du liquide à aspirer,
la soupape d'écrasement de tuyau (5, 6) présentant au moins deux dispositifs mobiles (5 ; 6) pour écraser le tuyau, lesquels peuvent être actionnés à la main indépendamment l'un de l'autre, et au moins l'un des dispositifs (5 ; 6) pour écraser le tuyau présentant un mécanisme de levier pour écraser le tuyau (4),
le tuyau (4) étant seulement écrasé dans la position "fermée" lorsqu'au moins deux de ces dispositifs (5 ; 6) sont déviés dans leur position écrasant le tuyau (4), tandis que lorsque seulement l'un de ces dispositifs (5 ; 6) est dévié dans sa position écrasant le tuyau (4), la section transversale de débit du tuyau (4) est ouverte au moins en partie,
**caractérisée en ce**
**qu'**un dispositif (6) pour écraser le tuyau présente un mécanisme de levier avec un levier (13) qui peut être dévié radialement par rapport au tuyau (4) par un bouton tournant (15) pouvant être commandé à la main avec une came (14) réalisée de manière excentrée par rapport à l'axe de rotation.

2. Unité de commande manuelle selon la revendication 1, **caractérisée en ce que** la came (14) peut être réglée dans deux positions différentes qui correspondent aux deux positions d'extrémité du levier (13) par rapport au tuyau (4), **en ce que** le levier (13) reste dans ces positions d'extrémité sans actionnement manuel et **en ce que** de préférence, le levier (13) est encliqueté dans les positions d'extrémité en regard de la came (14).

3. Unité de commande manuelle selon la revendication 1 ou 2, **caractérisée en ce que** dans le cas de deux dispositifs (5 ; 6) pour écraser le tuyau, ceux-ci viennent en prise au niveau d'emplacements mutuellement opposés du tuyau (4).

4. Unité de commande manuelle selon l'une quelconque des revendications précédentes, **caractérisée en ce que** lors de la déviation de tous les dispositifs (5, 6) pour écraser le tuyau dans leur position n'écrasant pas le tuyau (4) dans le boîtier (2), il existe un passage libre ayant au moins la section transversale extérieure du tuyau (4).

5. Unité de commande manuelle selon l'une quelconque des revendications précédentes, **caractérisée en ce qu'**au moins un dispositif (5) pour écraser le tuyau peut être ajusté à la main en continu.

6. Unité de commande manuelle selon l'une quelconque des revendications précédentes, **caractérisée en ce qu'**exactement deux dispositifs (5 ; 6) pour écraser le tuyau sont prévus et **en ce que** de préférence les deux dispositifs (5 ; 6) pour écraser le tuyau présentent un mécanisme de levier pour écraser le tuyau (4).

7. Unité de commande manuelle selon l'une quelconque des revendications précédentes, **caractérisée en ce que** le tuyau (4) dans le boîtier (2) de l'unité de commande manuelle présente la même section transversale qu'un tuyau de connexion à un récipient collecteur pour le liquide.

8. Unité de commande manuelle selon la revendication 7, **caractérisée en ce que** le tuyau de connexion au récipient collecteur pour le liquide se prolonge en continu et d'une seule pièce par le tuyau (4) dans le boîtier (2) de l'unité de commande manuelle.

9. Unité de commande manuelle selon l'une quelconque des revendications précédentes, **caractérisée en ce qu'**au moins un dispositif (5) pour écraser le tuyau est précontraint dans sa position écrasant le tuyau (4) par un ressort et peut être dévié à la main à l'encontre de la force de ressort de ce ressort.

10. Unité de commande manuelle selon la revendication 9, **caractérisée en ce que** le dispositif (5) pour écraser le tuyau présente un bras de levier (8) pour l'actionnement à la main, dont la longueur efficace vaut un multiple de la longueur efficace du bras de levier agissant pour l'écrasement du tuyau (4).
